# EUROPÄISCHE PATENTANMELDUNG

(11) **EP 1 035 363 A1**
(43) Veröffentlichungstag der Anmeldung: **13.09.2000**
(21) Anmeldenummer: 99103993.4
(22) Anmeldetag: 11.03.1999
(51) Int. Cl.: F16K 31/06

(54) **Elektromagnetisch betriebenes Fluidventil**

(71) Anmelder: Bürkert Werke GmbH & Co., D-74653 Ingelfingen (DE)
(72) Erfinder: Töpfer, Heinz Prof. Dr.,, 01277 Dresden (DE); Dettmann, Heinrich, 74676 Niedernhall (DE)
(74) Vertreter: Degwert, Hartmut, Dipl.-Phys.

(57) **Zusammenfassung**

Ein elektromagnetisch betriebenes Fluidventil mit wenigstens einem Ventilsitz (28; 42) weist einen Elektromagneten auf, der einen von einer Spule (16) umgebenen Kern (14) umfaßt. Das Ventil weist ferner eine bewegliche flachen metallische Ankerplatte (44) auf, die einer Polfläche des Elektromagneten gegenüberliegend angeordnet. Die Ankerplatte (44) ist zwischen zwei Schaltstellungen beweglich und wirkt mit dem Ventilsitz (28; 42) zusammen. In der ersten Schaltstellung schließt die Ankerplatte (44) den Ventilsitz (28; 42), und in der zweiten Schaltstellung gibt sie den Ventilsitz (28; 42) frei. Die Polfläche des Elektromagneten ist wenigstens teilweise durch einen radial nach außen gerichteten, flanschartigen Kragen (20) an dem Kern (14) gebildet und weist wenigstens einen Spalt (22) auf. Die Ankerplatte (44) erstreckt sich im wesentlichen über die gesamte Polfläche des Elektromagneten.

## Beschreibung

Die Erfindung betrifft ein elektromagnetisch betriebenes Fluidventil.

Aus der Entwicklung der Bustechnik und dem Wunsch der Entnahme der elektrischen Energie direkt aus dem Bus sowie der Erfüllung von Forderungen an den Einsatz dieser Antriebe in explosionsgefährdeter Umgebung resultiert die Forderung nach leistungsarm ansteuerbaren Ventilen.

Diese Forderung wird auf hervorragende Weise durch ein elektromagnetisch betriebenes Fluidventil erfüllt mit wenigstens einem Ventilsitz, einem Elektromagneten, der einen von einer Spule umgebenen Kern umfaßt, und einer beweglichen flachen metallischen Ankerplatte, die einer ersten Polfläche des Elektromagneten gegenüberliegend angeordnet und zwischen zwei Schaltstellungen beweglich ist, wobei die Ankerplatte mit dem Ventilsitz zusammenwirkt und in der ersten Schaltstellung den Ventilsitz schließt sowie in der zweiten Schaltstellung den Ventilsitz freigibt, wobei die Polfläche des Elektromagneten wenigstens teilweise durch einen radial nach außen gerichteten, flanschartigen Kragen an dem Kern gebildet ist und wenigstens einen Spalt aufweist und wobei sich die Ankerplatte im wesentlichen über die gesamte Polfläche des Elektromagneten erstreckt. Bei einem solchen Ventil können durch einen optimierten Spalt bei bestromtem Magneten mit minimaler Ansteuerleistung größtmögliche Anziehungskräfte auf die Ankerplatte erreicht werden. Dies wird dadurch begünstigt, daß sich die Ankerplatte über die gesamte Polfläche des Elektromagneten erstreckt, da so die Anziehungskraft des Elektromagneten auf die Ankerplatte effektiv genutzt werden kann. So wird bei einem erfindungsgemäßen Ventil bei einem Druck von 8 bar die sichere Schaltfunktion des Ventils mit einer Leistung von nur 5 bis 10 mW erreicht.

Bei einer in bezug auf die Bauform vorteilhaften Gestaltung des Ventils ist der Elektromagnet in einem Magnetgehäuse aufgenommen und der Spalt umlaufend zwischen der inneren Wandung des Magnetgehäuses und dem Kragen an dem Kern gebildet.

Vorzugsweise ist ein Rückstellelement für die Ankerplatte vorgesehen, das bei unbestromtem Elektromagneten eine Rückstellkraft auf die Ankerplatte ausübt und diese bei unbestromtem Elektromagneten in der zweiten Schaltstellung hält. Bei einer Ausführungsform des Ventils, bei der der wenigstens eine Ventilsitz des Ventils bei bestromtem Magneten verschlossen wird, kann dieser Ventilsitz bei unbestromtem Magneten somit durch das Rückstellelement freigegeben werden.

Als Rückstellelement wird vorzugsweise eine der Ankerplatte gegenüberliegend angeordnete permanentmagnetische Scheibe verwendet, die ohne großen Platzbedarf untergebracht werden kann. Die permanentmagnetische Scheibe übt eine Anziehungskraft auf die Ankerplatte aus und ersetzt eine bei herkömmlichen Ventilen übliche Rückstellfeder für die Ankerplatte, die für die notwendigen Haltekräfte zum Verschließen eines Ventilsitzes erforderlich ist. Als besonderer Vorteil bei dieser Ausgestaltung ist es zu werten, daß zum Öffnen dieses (und evtl. Schließen eines weiteren) Ventilsitzes die progressiv wirkende Rückstellkraft einer solchen Feder nicht überwunden werden muß. Damit wird die Energie zum Öffnen eines vorher verschlossenen bzw. die Halteenergie zum dichten Verschließen eines Ventilsitzes bei bestromtem Magneten weiter reduziert.

Um die Ansteuerleistung für das erfindungsgemäße Ventil weiter zu reduzieren, ist das Ventil so ausgelegt. daß die Dicke der Ankerplatte und der Hub der Ankerplatte zwischen zwei Schaltstellungen des Ventils in der gleichen Größenordnung liegen.

Die Auslegung der Ventilsitze als Elastomere sorgt bei Verwendung von Metalldüsen vorteilhaft dafür, daß bei geringen Verlagerungen des Ankers keine bleibenden Deformationen der Oberfläche der üblicherweise auf dem Anker befindlichen Elastomerschicht entstehen. So kann eine bessere Dichtheit über einen längeren Zeitraum gewährleistet werden. Eine einfache Justierung eines Ventilsitzes wird erreicht, wenn der Ventilsitz als Düsenmund einer in einem Kanal verschiebbaren Düse ausgebildet ist.

In einer bevorzugten Ausführungsform der Erfindung umfaßt das Ventil zwei Ventilsitze, die auf einander gegenüberliegenden Seiten der Ankerplatte und koaxial zu dem Kern des Elektromagneten angeordnet sind. In einer ersten Schaltstellung des Ventils bei bestromtem Elektromagneten verschließt die Ankerplatte den ersten Ventilsitz und in einer zweiten Schaltstellung bei unbestromtem Elektromagneten den zweiten Ventilsitz dicht. Die Ankerplatte fungiert somit als direktes Schließelement für beide Ventilsitze. Der Hub der Ankerplatte und damit die Ansteuerleistung sowie die Bauhöhe des Ventils können dadurch äußerst gering gehalten werden. Bei entsprechender Auslegung des Rückstellelements reicht alleine die von ihm ausgehende Rückstellkraft auf die Ankerplatte aus, den zweiten Ventilsitz des Ventils dicht zu verschließen.

Vorteilhafte Ausgestaltungen des erfindungsgemäßen Ventils ergeben sich aus den Unteransprüchen.

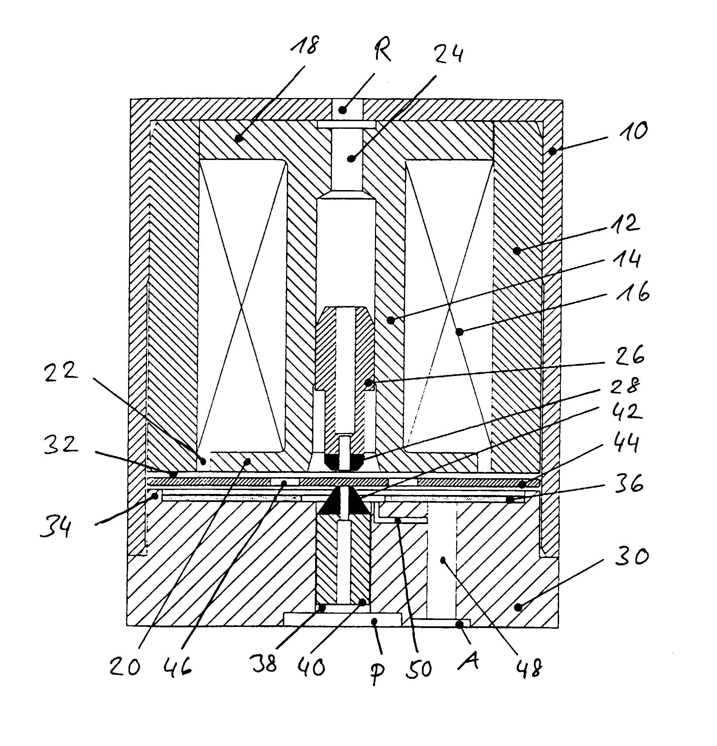

Weitere Einzelheiten der Erfindung ergeben sich aus der folgenden Beschreibung und aus der Zeichnung, auf die Bezug genommen wird. In der Zeichnung zeigt die einzige Figur eine Querschnittsansicht eines fluidischen Ventils mit einem Elektromagnetantrieb.

Bei der in der Figur dargestellten Ventileinheit ist in einem (gemäß der Figur) nach unten offenen Haube 10 ein Magnetsystem bestehend aus einem Magnetgehäuse 12, einem darin angeordneten Kern 14 und einer direkt um diesen gewickelten Spule 16 untergebracht. Der Kern 14 setzt sich aus einem zylindrischen Kernkürper sowie einem oberen und einem unteren flanschartigen Kragen 18 bzw. 20 zusammen, die an dem oberen bzw. unteren axialen Ende des Kernkörpers ausgebildet sind und sich radial nach außen erstrecken. Die untere Polfläche des Elektromagneten ist durch den unteren Kragen 20 des Kerns 14 und die Unterseite des Magnetgehäuses 12 gebildet, die bündig miteinander abschließen. Zwischen dem unteren Kragen 20 des Kerns 14 und der inneren Wandung des Magnetgehäuses 12 ist ein radialer Ringspalt 22 ausgebildet.

In der oberen Wandung der Haube 10 ist mittig ein erster Ventilanschluß R gebildet, der in einen ersten Kanal 24 mündet, welcher sich koaxial zu dem Kern 14 vollständig durch diesen hindurch erstreckt. In dem ersten Kanal 24 ist eine erste Düse 26 verschiebbar aufgenommen, deren nach unten weisender Düsenmund aus einem Elastomer besteht. Der Düsenmund stellt gleichzeitig einen ersten Ventilsitz 28 dar.

Die Haube 10 ist mit der offenen Seite auf eine massive Anschlußplatte 30 aufgesetzt. Die Anschlußplatte 30 erstreckt sich teilweise in den Innenraum der Haube 10. Zwischen Haube 10 und Anschlußplatte 30 erstreckt sich eine Kammer 32, deren Höhe im Vergleich zu ihrer Breite gering ist. Die Kammer 32 ist nach oben durch die Polfläche des Elektromagneten (Magnetgehäuse 12 und Kern 14) begrenzt, die zur Kammer 32 hin bündig abschließen. In einer Vertiefung auf der Oberseite der Anschlußplatte 30, die durch einen erhöhten Randbereich 34 begrenzt ist, ist eine ringförmige permanentmagnetische Scheibe 36 befestigt. Bei anderen Ausführungsformen ist eine permanentmagnetische Schicht in die Scheibe integriert bzw. auf die Scheibe aufgetragen.

An der Unterseite der Anschlußplatte 30 ist mittig ein zweiter Ventilanschluß P ausgebildet, der in einen zweiten Kanal 38 mündet. Der zweite Kanal 38 erstreckt sich koaxial zu dem ersten Kanal 24 durch die gesamte Anschlußplatte 30. In dem zweiten Kanal 38 ist eine zweite Düse 40 verschiebbar aufgenommen, deren nach oben in die Kammer 32 weisender Düsenmund durch ein Elastomer gebildet ist, wobei sich der Düsenmund durch den Ring 36 hindurch in die Kammer 32 erstreckt. Der Düsenmund der zweiten Düse 40 bildet denzweiten Ventilsitz 42.

Auf dem Elastomer liegt in Gegenüberlage zu dem Ring 36 eine flache metallische Ankerplatte 44 lose auf, die mit einer Elastomerschicht überzogen ist und den gleichen Durchmesser wie der Außenumfang des Magnetgehäuses 12 besitzt. Die Ankerplatte 44 ist in Axialrichtung in der Kammer 32 beweglich. Die Ankerplatte 44 weist zwei Verbindungsdurchgänge 46 auf, die von der Mitte der Ankerplatte 44 beabstandet angeordnet sind. Der Abstand zur Mitte ist ausreichend groß, so daß die Mündung des ersten Kanals 24 in die Kammer 32 durch den mittleren Bereich der Ankerplatte 44 abgedichtet werden kann, wenn die Ankerplatte 44 eine obere Position einnimmt, in der sie an dem Magnetgehäuse 12 und dem Kern 14 anliegt.

Ebenfalls vertikal durch die Anschlußplatte 30 verläuft ein Auslaßkanal 48, der seitlich versetzt zu dem zweiten Kanal 38 angeordnet ist. Der Auslaßkanal 48 ist nach oben durch den Ring 36 begrenzt und mündet nach unten in einen Ausgangsanschluß A. Über einen Verbindungskanal 50, der im Inneren des Rings 36 mündet, steht der Auslaßkanal A mit der Kammer 32 in Verbindung.

In der in der Figur gezeigten zweiten Schaltstellung des Magnetventils bei nicht aktiviertem Elektromagneten erzeugt der permantmagnetische Ring 36 eine Anziehungskraft auf die Ankerplatte 44, die so groß ist, daß der durch den Düsenmund der zweiten Düse 40 gebildete zweite Ventilsitz 42 dicht verschlossen ist. Dabei steht der erste Ventilanschluß R über den ersten Kanal 24, dessen Mündung in die Kammer 32 freigegeben ist, und die Durchgänge 46 in der Ankerplatte 44 sowie den Verbindungskanal 50 in Verbindung mit dem Auslaßkanal A. Der permanentmagnetische Ring 36 dient somit als Rückstellelement für die Ankerplatte 44.

Bei bestromtem Elektromagneten ist die durch den aktivierten Magneten ausgeübte Anziehungskraft auf die Ankerplatte 44 deutlich größer als die durch den permanentmagnetischen Ring 36 hervorgerufene, so daß die Ankerplatte 44 nach oben bewegt wird und in der so erreichten ersten Schaltstellung den durch den Düsenmund der ersten Düse 26 gebildeten ersten Ventilsitz 28 dicht verschließt, wogegen der zweite Ventilsitz 42 freigegeben wird. Der erforderliche Hub der Ankerplatte 44 ist aufgrund der flachen Auslegung der Kammer 32 und dem geringen Abstand der beiden Ventilsitze 28, 42 voneinander sehr gering. Somit steht nun der zweite Ventilanschluß P über die Kammer 32 und den Verbindungskanal 50 mit dem Auslaß A in Verbindung.

Der Ringspalt 22 zwischen dem unterem Kragen 20 des Kerns 14 und der inneren Wandung des Magnetgehäuses 12 ist so optimiert, daß bei minimaler Ansteuerleistung in der ersten Schaltstellung des Ventils größtmögliche Haltekräfte auf die Ankerplatte 44 zur Abdichtung des ersten Ventilsitzes 28 wirken.

Eine Justage der Ventilsitze 28 und 42 kann durch Verschiebung der Düsen 26 bzw. 40 in den Kanälen 24 bzw. 38 vorgenommen werden.

## Patentansprüche

1. Elektromagnetisch betriebenes Fluidventil mit wenigstens einem Ventilsitz (28; 42), einem Elektromagneten, der einen von einer Spule (16) umgebenen Kern (14) umfaßt, und einer beweglichen flachen metallischen Ankerplatte (44), die einer Polfläche des Elektromagneten gegenüberliegend angeordnet und zwischen zwei Schaltstellungen beweglich ist, wobei die Ankerplatte (44) mit dem Ventilsitz (28; 42) zusammenwirkt und in der ersten Schaltstellung den Ventilsitz (28; 42) schließt sowie in der zweiten Schaltstellung den Ventilsitz (28; 42) freigibt, dadurch gekennzeichnet, daß die erste Polfläche des Elektromagneten wenigstens teilweise durch einen radial nach außen gerichteten, flanschartigen Kragen (20) an dem Kern (14) gebildet ist und wenigstens einen Spalt (22) aufweist und daß sich die Ankerplatte (44) im wesentlichen über die gesamte Polfläche des Elektromagneten erstreckt.

2. Ventil nach Anspruch 1, dadurch gekennzeichnet, daß der Elektromagnet in einem Magnetgehäuse (12) aufgenommen ist und der Spalt (22) umlaufend zwischen der inneren Wandung des Magnetgehäuses (12) und dem Kragen (20) an dem Kern (14) gebildet ist.

3. Ventil nach Anspruch 1 oder 2, dadurch gekennzeichnet, daß ein Rückstellelement vorgesehen ist, das eine Rückstellkraft auf die Ankerplatte (44) ausübt und diese bei unbestromtem Elektromagneten in der zweiten Schaltstellung hält.

4. Ventil nach Anspruch 3, dadurch gekennzeichnet daß das Rückstellelement durch eine der Ankerplatte (44) gegenüberliegenden permanentmagnetische Scheibe (36) gebildet ist.

5. Ventil nach einem der vorstehenden Ansprüche, dadurch gekennzeichnet, daß die Dicke der Ankerplatte (44) und der Hub der Ankerplatte (44) zwischen zwei Schaltstellungen des Ventils in der gleichen Größenordnung liegen.

6. Ventil nach einem der vorstehenden Ansprüche, dadurch gekennzeichnet, daß die Ankerplatte (44) lose in dem Ventil eingelegt ist.

7. Ventil nach einem der vorstehenden Ansprüche, dadurch gekennzeichnet, daß die Ankerplatte (44) wenigstens einen Durchgang (46) aufweist.

8. Ventil nach Anspruch 8, dadurch gekennzeichnet, daß ein Auslaßkanal (A) vorgesehen ist, der in einer der beiden Schaltstellungen des Ventils über einen Durchgang der permanentmagnetischen Scheibe (36) und den wenigstens einen Durchgang (46) der Ankerplatte (44) mit einem Druckanschluß (P; R) des Ventils in Verbindung steht.

9. Ventil nach einem der vorstehenden Ansprüche, dadurch gekennzeichnet, daß wenigstens einer der Ventilsitze (28, 42) durch ein Elastomer gebildet ist.

10. Ventil nach einem der vorstehenden Ansprüche, dadurch gekennzeichnet, daß wenigstens einer der Ventilsitze (28, 42) als Düsenmund einer in einem Kanal (24; 38) verschiebbaren Düse (26; 40) ausgebildet ist.

11. Ventil nach einem der vorstehenden Ansprüche, dadurch gekennzeichnet, daß zwei Ventilsitze (28, 42) auf einander gegenüberliegenden Seiten der Ankerplatte (44) und koaxial zu dem Kern (14) angeordnet sind.

12. Ventil nach Anspruch 11, dadurch gekennzeichnet, daß die Ankerplatte (44) in einer ersten Schaltstellung des Ventils bei bestromtem Elektromagneten den ersten Ventilsitz (28) und in einer zweiten Schaltstellung bei unbestromtem Elektromagneten den zweiten Ventilsitz (42) dicht verschließt.

13. Ventil nach Anspruch 11 oder 12, dadurch gekennzeichnet daß das Rückstellelement so ausgelegt ist, daß die von ihm ausgehende Rückstellkraft auf die Ankerplatte (44) ausreicht, um den zweiten Ventilsitz (42) des Ventils dicht zu verschließen.

14. Ventil nach einem der vorstehenden Ansprüche, dadurch gekennzeichnet, daß die Spule (16) unmittelbar auf den Kern (14) aufgewickelt ist.
